# EUROPÄISCHE PATENTSCHRIFT

(11) **EP 2 477 770 B1**
(45) Veröffentlichungstag und Bekanntmachung des Hinweises auf die Patenterteilung: **11.09.2013**
(21) Anmeldenummer: 10752584.2
(22) Anmeldetag: 13.09.2010
(51) Int. Cl.: B23B 1/00, B23B 29/04, B23Q 5/04

(54) **VERFAHREN ZUM DREHBEARBEITEN EINES ROTIERENDEN WERKSTÜCKS**
METHOD OF TURNING A ROTATING WORKPIECE
PROCÉDÉ DE TOURNAGE D'UNE PIÈCE ENTRAINÉE EN ROTATION

(30) Priorität: 14.09.2009 DE 102009042149
(43) Veröffentlichungstag der Anmeldung: 25.07.2012
(73) Patentinhaber: Index-Werke GmbH & Co. KG Hahn & Tessky, 73730 Esslingen (DE)
(72) Erfinder: GROSSMANN, Walter, 73666 Baltmannsweiler (DE); SCHMITZ, Ernst-Ulrich, 73207 Plochingen (DE)
(74) Vertreter: Beck, Jürgen
(86) Internationale Anmeldenummer: PCT/EP2010/063414
(87) Internationale Veröffentlichungsnummer: WO 2011/029944

(56) Entgegenhaltungen:
- EP-A1- 1 375 064
- WO-A1-2005/118194
- DE-A1- 10 144 649
- DE-A1-102007 033 820
- DE-B3-102006 011 300
- JP-A- 60 155 310
- Kennametal Hertel UK: "Turning 501.00 2000 Catalogue", 2000, Kennametal Hertel UK, West Midlands, XP002616328, Seite 176; Beispiele MTFN, MTAN, MTGN Seite 184; Beispiele MTAN-S 90 Seite 185; Beispiele MTFN 90, MTGN 90

## Beschreibung

Die Erfindung betrifft ein Verfahren zum Bearbeiten eines um eine Werkstückspindelachse rotierend angetriebenen Werkstücks mittels eines Werkzeugs mit einer in einem Werkzeugträger fixierbaren Werkzeugbasis sowie mit einer Werkzeugschneide, mit welcher mindestens ein Werkstückbereich des Werkstücks zur Erzeugung einer definierten Werkstückgeometrie in dem Werkstückbereich längs einer Schnittlinie spanabhebend bearbeitet wird.

Derartige Verfahren sind beispielsweise aus der DE 101 44 649 B4 bekannt.

Bei derartigen Verfahren geht es darum ein Werkstück in dem Werkstückbereich drallfrei zu bearbeiten, das heißt so zu bearbeiten, dass auf der bearbeiteten Werkstückgeometrie keinerlei gewindeähnliche Strukturen, insbesondere gewindeähnliche Riefen bei der spanabhebenden Bearbeitung entstehen, wie dies üblicherweise beim Längsdrehen der Fall ist.

Bei derartigen bekannten Verfahren treten entweder im Bereich der Werkzeugschneide hohe Kräfte auf oder es ist eine komplizierte Bewegung der Werkzeugschneide relativ zum Werkstück erforderlich, die eine aufwendige Steuerung der Bewegung des Werkzeugs relativ zum Werkstück voraussetzt.

Neben der aufwändigen Steuerung zur Werkzeugbewegung muss in der Werkzeugmaschine ein hoher Zusatzaufwand getätigt werden, damit die bekannten Verfahren zum drallfreien Bearbeiten umsetzbar sind.

Ein Verfahren mit den Merkmalen des Oberbegriffs des Anspruchs 1 ist aus der DE 10 2006 011 300 B3 bekannt.

Der Erfindung liegt daher die Aufgabe zugrunde, ein Verfahren der eingangs beschriebenen Art derart zu verbessern, dass bei möglichst einfacher Bewegung des Werkzeugs ein sogenanntes drallfreies Bearbeiten des Werkstücks möglich ist.

Diese Aufgabe wird durch ein Verfahren gemäß dem Anspruch 1 gelöst.

Der Vorteil der erfindungsgemäßen Lösung ist darin zu sehen, dass zur Bearbeitung des Werkstückbereichs eine einfache Bewegung, nämlich lediglich eine Schwenkbewegung der Werkzeugschneide um die Werkzeugachse bei gleichzeitig um die Werkstückspindelachse rotierendem Werkstück erforderlich ist, um die definierte drallfrei bearbeitete Werkstückgeometrie zu erhalten.

Somit ist es lediglich erforderlich, das Werkzeug relativ zum Werkstück entsprechend zu positionieren, beispielsweise unter Verwendung einer bei jeder üblichen Drehmaschine vorhandenen X-Achse, und die Werkzeugschneide um die Werkzeugachse zu verschwenken.

Insbesondere ist es nicht erforderlich, das Werkzeug in Richtung der X-Achse und/oder der Y-Achse beim Entlanglaufen des Eingriffsbereichs längs der Schnittlinie zu bewegen um eine als Gerade verlaufende Schnittlinie zu erhalten und somit kegelförmige oder zylindrische Flächen zu erzeugen.

Weitere vorteilhafte Lösungen des erfindungsgemäßen Verfahrens sind Gegenstand der Verfahrensansprüche 2 bis 15.

Hinsichtlich des Verlaufs der Schnittlinie relativ zur Werkstückspindelachse wurden bislang keine näheren Angaben gemacht.

Um definierte geometrische Verhältnisse zu erhalten ist es jedoch von Vorteil, wenn die Schnittlinie und die Werkstückspindelachse in einer gemeinsamen geometrischen Ebene liegen.

Ferner ist es, um eine definierte Bearbeitungsqualität längs der gesamten Schnittlinie zu erhalten, von Vorteil, wenn die Schneidenebene durch die Schnittlinie hindurch und in dieser tangential zu der herzustellenden Werkzeuggeometrie in dem Werkstückbereich verläuft.

Hinsichtlich der Ausrichtung der Schneidkante relativ zur Schnittlinie wurden bislang keine näheren Angaben gemacht.

So sieht eine vorteilhafte Lösung vor, dass eine in der Schneidenebene liegende Tangente an eine spanabhebend wirkende Schneidkantenseite der Schneidkante in allen Positionen des Eingriffsbereichs in einem spitzen Winkel zur Schnittlinie verläuft.

Diese Lösung hat den Vorteil, dass die Ausrichtung der Schneidkante und somit der Schneidkantenseite, die jeweils spanabhebend wirkt, relativ zur Schnittlinie nicht allzu stark variiert, um die auf die Werkzeugschneide wirkenden Kräfte ebenfalls nicht allzu stark variieren zu lassen.

Noch vorteilhafter ist es, hierbei, wenn der spitze Winkel in allen Positionen des Eingriffsbereichs in einem Bereich zwischen ungefähr 20° und ungefähr 40° liegt.

Damit ist die Ausrichtung der Schneidkante relativ zur Schnittlinie soweit eingegrenzt, dass eine im Wesentlichen drallfreie Werkstückgeometrie erzeugbar ist.

Um die Oberflächenqualität noch mehr zu verbessern ist es vorteilhaft, wenn der spitze Winkel in allen Positionen des Eingriffsbereichs nur innerhalb einer Variationsbandbreite von maximal 10° variiert.

Das heißt, dass Maximalwerte und Minimalwerte des spitzen Winkels, der sich beim Wandern des Eingriffsbereichs längs der Schnittlinie ergibt, sich um maximal 10° unterscheiden und insbesondere zwischen 20° und 40° liegen.

Noch besser ist es, wenn der spitze Winkel nur innerhalb einer Variationsbandbreite von maximal 8° variiert und noch besser ist es, wenn der spitze Winkel nur innerhalb einer Variationsbandbreite von maximal 4°variiert.

Noch bessere Werte sind dann erzielbar, wenn der spitze Winkel innerhalb einer Variationsbandbreite von maximal 2° variiert, so dass dadurch insbesondere die auf die Werkzeugschneide wirkenden Kräfte als konstant angesehen werden können und damit durch variierende Kräfte auf die Werkzeugschneide bedingte Ungenauigkeiten entfallen.

Hinsichtlich der Relativbewegung des Eingriffsbereichs zur Schnittlinie und zur Schneidkante wären die unterschiedlichsten Lösungen denkbar. Beispielsweise wäre es denkbar, dass die Werkzeugschneide so geformt ist, dass zwei Eingriffsbereiche längs der Schnittlinie entstehen und längs dieser wandern.

Es wäre aber auch denkbar, dass die Werkzeugschneide so gekrümmt ist, dass der Eingriffsbereich auf der Schnittlinie hin und her wandert.

Besonders günstig ist es jedoch, wenn die Werkzeugschneide einen derartigen Schneidenverlauf aufweist, dass der Eingriffsbereich bei einem Schwenken der Werkzeugschneide in einer Richtung von einem Ende der Schnittlinie zum anderen Ende der Schnittlinie wandert.

Bei einer Ausführungsform ist vorgesehen, dass die Werkzeugschneide so geformt ist, dass die Schneidkante in der Schneidenebene gerade gerichtet verläuft.

Bei einem derartigen gerade gerichteten Verlauf variiert der spitze Winkel zwischen der Tangente des Eingriffsbereichs und der Schnittlinie beim Wandern des Eingriffsbereichs.

Aus diesem Grund sieht eine vorteilhafte Lösung vor, dass die Werkzeugschneide so geformt ist, dass die Schneidkante in der Schneidenebene gekrümmt verläuft.

Mit einem derartigen gekrümmten Verlauf der Schneidkante lässt sich dieser Verlauf so anpassen, dass der spitze Winkel zwischen der Tangente im Eingriffsbereich und der Schnittlinie möglichst wenig variiert.

Beispielsweise wäre es denkbar, die Werkzeugschneide so zu formen, dass diese entsprechend einer Evolvente zur Werkzeugachse verläuft.

Eine andere einfache Möglichkeit sieht vor, dass die Schneidkante in der Schneidenebene sichelförmig gekrümmt verläuft.

Eine andere vorteilhafte Variante sieht vor, dass die Schneidkante in der Schneidenebene einen an einen Kreisbogen angenäherten Verlauf aufweist.

Eine weitere günstige Lösung zur Erzeugung einer möglichst hohen Oberflächenqualität in der herzustellenden Werkstückkontur sieht vor, dass der Eingriffsbereich längs der Schneidkante eine Schneidenlänge durchwandert, die größer ist als eine vom Eingriffsbereich durchwandernde Länge der Schnittlinie.

Hinsichtlich der Anordnung der Schneidkante wurden bislang keine näheren Angaben gemacht.

So könnte die Schneidkante direkt an einen Werkzeugkörper angeformt werden.

Eine besonders günstige Lösung sieht vor, dass die Schneidkante an eine Schneidplatte angeformt ist.

Eine derartige Schneidplatte ist vorzugsweise in einem Werkzeuggrundkörper gehalten, welcher die definierte Ausrichtung und Fixierung der Schneidplatte erlaubt.

Vorzugsweise ist dabei die Schneidplatte auswechselbar am Werkzeuggrundkörper gehalten.

Eine besonders günstige Fixierung sieht vor, dass die Schneidplatte formschlüssig an dem Werkzeuggrundkörper gehalten ist.

Im Falle der Verwendung eines Werkzeuggrundkörpers ist vorzugsweise vorgesehen, dass der Werkzeuggrundkörper um die Werkzeugachse relativ zu einer Werkzeugbasis schwenkbar ist.

Eine derartige Schwenkbarkeit des Werkzeuggrundkörpers kann in unterschiedlichster Art und Weise realisiert werden.

Beispielsweise wäre es denkbar, eine spezielle Vorrichtung zum Verschwenken des Werkzeuggrundkörpers relativ zur Werkzeugbasis einzusetzen.

Eine besonders kostengünstige Lösung sieht jedoch vor, dass die Werkzeugbasis als Werkzeughaltergehäuse eines angetriebenen Werkzeughalters ausgebildet ist.

Damit besteht die Möglichkeit, die durch einen angetriebenen Werkzeughalter bereits realisierte Kinematik zum Schwenken oder Drehen des Werkzeugs auszunutzen, ohne hierzu eine separate konstruktive Lösung vorzusehen.

Hinsichtlich der Fixierung der Werkzeughalterbasis ist es ebenfalls günstig, wenn die Werkzeughalterbasis in eine Standardwerkzeughalteraufnahme in einem Werkzeugträger einsetzbar ist, so dass die Bearbeitungseinheit keinen speziellen Aufbau der Werkzeugmaschine erforderlich macht.

Hinsichtlich des Antriebs für das Verschwenken der Werkzeugschneide wurden bislang keine näheren Angaben gemacht.

Hierzu könnte beispielsweise der Bearbeitungseinheit ein eigener Drehantrieb zugeordnet werden.

Besonders günstig ist es, wenn der Werkzeugträger mit einem Drehantrieb für das Schwenken der Werkzeugschneide um die Werkzeugachse versehen ist.

Besonders günstig ist es, wenn der Drehantrieb ein drehwinkelsteuerbarer Antrieb ist.

Eine besonders zweckmäßige Lösung sieht vor, dass der drehwinkelsteuerbare Antrieb als lagegeregelter Servoantrieb oder als lagegeregelter NC-Achsenantrieb ausgebildet ist, so dass dieser sich positionsgenau durch eine Steuerung der Werkzeugmaschine ansteuern lässt.

Weitere Merkmale und Vorteile der erfindungsgemäßen Lösung sind Gegenstand der nachfolgenden Beschreibung sowie der zeichnerischen Darstellung eines Ausführungsbeispiels.

In der Zeichnung zeigen:
- Fig. 1: eine schematische Darstellung einer Werkzeugmaschine, bei welcher eine dargestellte Bearbeitungseinheit einsetz-bar ist;
- Fig. 2: eine perspektivische Darstellung eines Werkzeughalters, der für die dargestellte Bearbeitungseinheit einsetzbar ist;
- Fig. 3: einen Längsschnitt durch eine erste Bearbeitungseinheit, umfassend den in Fig. 3 dargestellten Werkzeughalter;
- Fig. 4: eine schematische Darstellung einer Ausrichtung des Werkzeugs relativ zum Werkstück in perspektivischer Darstellung beim ersten Ausführungsbeispiel;
- Fig. 5: eine Ansicht in Richtung des Pfeils A in Fig. 4;
- Fig. 6: eine Ansicht in Richtung des Pfeils B in Fig. 4;
- Fig. 7: einen vergrößerten Schnitt längs Linie 7-7 in Fig. 6;
- Fig. 8: eine schematische Darstellung ähnlich Fig. 5 unmittelbar vor Beginn einer spanabhebenden Bearbeitung mittels der eingesetzten Werkzeugschneide;
- Fig. 9: eine Darstellung ähnlich Fig. 8 unmittelbar nach Beginn der spanabhebenden Bearbeitung mit Darstellung eines sich ergebenden Eingriffsbereichs;
- Fig. 10: eine Darstellung ähnlich Fig. 9 bei fortschreitender spanabhebender Bearbeitung mittels der Werkzeugschneide;
- Fig. 11: eine Darstellung der Lage der Werkzeugschneide unmittelbar nach Beendigung der spanabhebenden Bearbeitung,
- Fig. 12: eine schematische Darstellung einer Ausbildung der Werkzeugschneide angenähert an einen Kreisbogen und
- Fig. 13: eine Ansicht ähnlich Fig. 5 einer zweiten Bearbeitungseinheit.

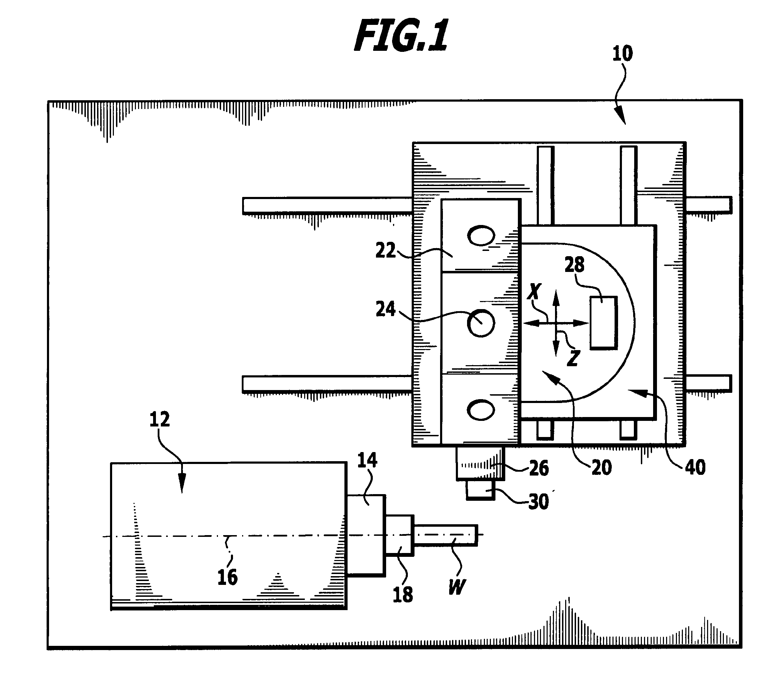

Ein in Fig. 1 schematisch dargestellte Drehmaschine umfasst ein Maschinengestell 10, welches ein Werkstückspindelgehäuse 12 trägt, in welchem eine Werkstückspindel 14 um eine als Ganzes mit 16 bezeichnete Werkstückspindelachse drehbar gelagert ist.

Die Werkstückspindel 14 ist mit einer Werkstückaufnahme 18 versehen, in welche ein als Ganzes mit W bezeichnetes Werkstück einsetzbar ist, so dass das Werkstück W um die Werkstückspindelachse 16 rotierend antreibbar ist.

Zum Bearbeiten des Werkstücks W ist ein als Ganzes mit 20 bezeichneter Werkzeugträger vorgesehen, welcher beispielsweise als Werkzeugrevolver ausgebildet ist und einen Revolverkopf 22 umfasst, in dessen Werkzeugaufnahmen 24 Werkzeuge 30, umfassend einen Werkzeughalter 26, einsetzbar sind, wobei ein durch die Steuerung der Werkzeugmaschine lagegeregelter NC-Achsantrieb 28 für einen Antrieb der Werkzeuge 30 vorgesehen ist.

Der Werkzeugträger 20 sitzt dabei beispielsweise auf einem als Ganzes mit 40 bezeichnetem Werkzeugschlittensystem, welches ein Bewegen des Werkzeugträgers 20 sowohl in einer X-Richtung senkrecht zur Werkstückspindelachse 16 als auch in einer Z-Richtung parallel zur Werkstückspindelachse 16 ermöglicht.

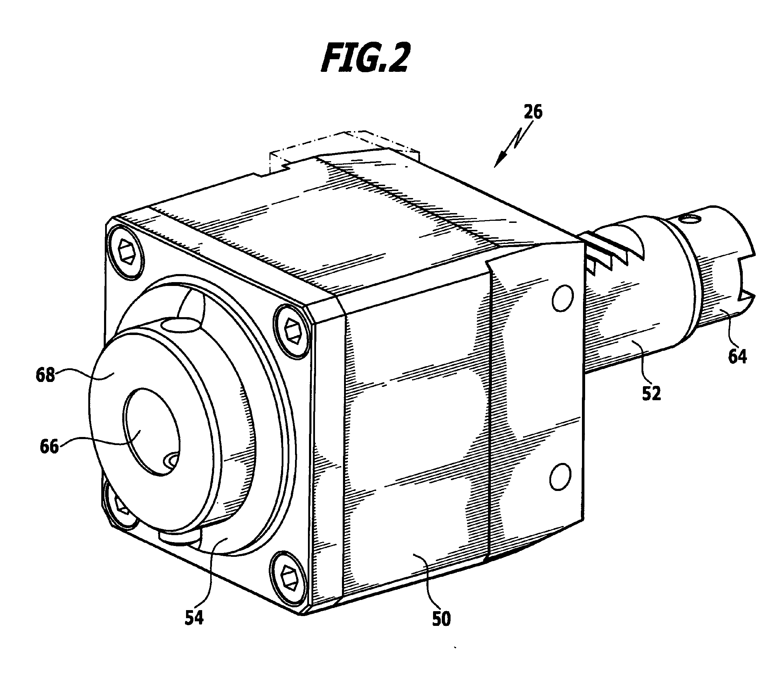

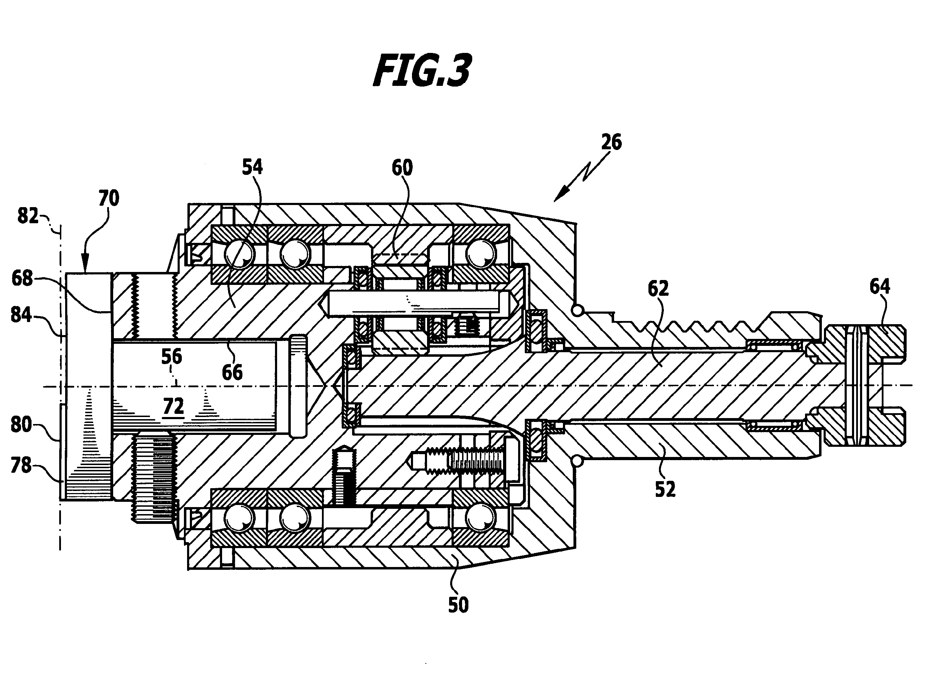

Wie in Fig. 2 und 3 dargestellt, ist der Werkzeughalter 26 als Werkzeughalter für angetriebene Werkzeuge ausgebildet und umfasst ein Werkzeughaltergehäuse 50, welches mit einem Einsteckzapfen 52 versehen ist, der in die Werkzeugaufnahme 24 einsteckbar und fixierbar ist.

In dem Werkzeughaltergehäuse 50 ist eine als Ganzes mit 54 bezeichnete Werkzeugspindel um eine Werkzeugachse 56 drehbar gelagert, wobei die Werkzeugspindel 54 über ein Übersetzungsgetriebe 60, beispielsweise ausgebildet als Planetengetriebe, antreibbar ist.

Das Übersetzungsgetriebe 60 dient dazu, eine Drehzahl einer Werkzeugantriebswelle 62 zu reduzieren, die koaxial zur Werkzeugspindel 54 angeordnet ist und sich ausgehend von dem Übersetzungsgetriebe durch den Einsteckschaft 52 hindurcherstreckt und an einem dem Werkzeughaltergehäuse 50 abgewandten Ende des Einsteckschafts 52 ein Kupplungselement 64 trägt, mit welchem eine mittelbare Verbindung zu dem dem Revolverkopf 22 zugeordneten lagegeregelten NC-Achsantrieb herstellbar ist.

An der Werkzeugspindel 54 ist ein als Ganzes mit 70 bezeichneter Werkzeuggrundkörper fixierbar, welcher beispielsweise als Scheibe ausgebildet und mit einem Haltezapfen 72 versehen ist, der in eine Werkzeugaufnahme 66 der Werkzeugspindel 54 einführbar und in dieser fixierbar ist, wobei der Werkzeuggrundkörper 70 vorzugsweise auf einer Stirnseite 68 der Werkzeugspindel 54 aufliegt und durch diese abgestützt ist.

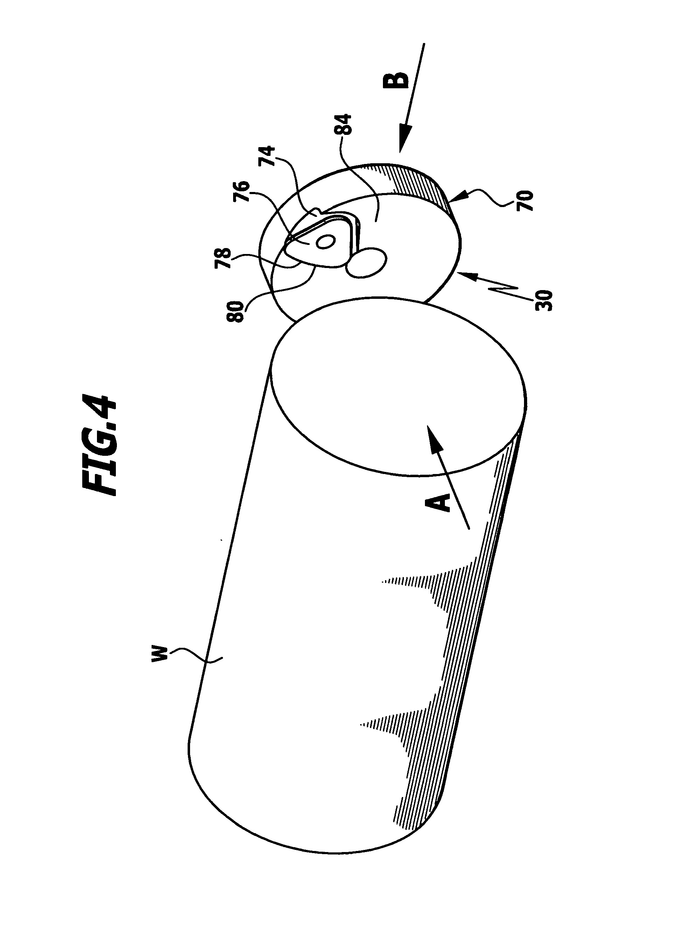

Wie in Fig. 4 dargestellt, ist der Werkzeuggrundkörper 70 mit einer Schneidplattenaufnahme 74 versehen, in welche eine Schneidplatte 76 einsetzbar ist, die ihrerseits eine Werkzeugschneide 78 mit einer Schneidkante 80 bildet.

Die Schneidkante 80 verläuft dabei, wie in Fig. 3 dargestellt, in einer Schneidenebene 82, die senkrecht zur Werkzeugachse 56 ausgerichtet ist.

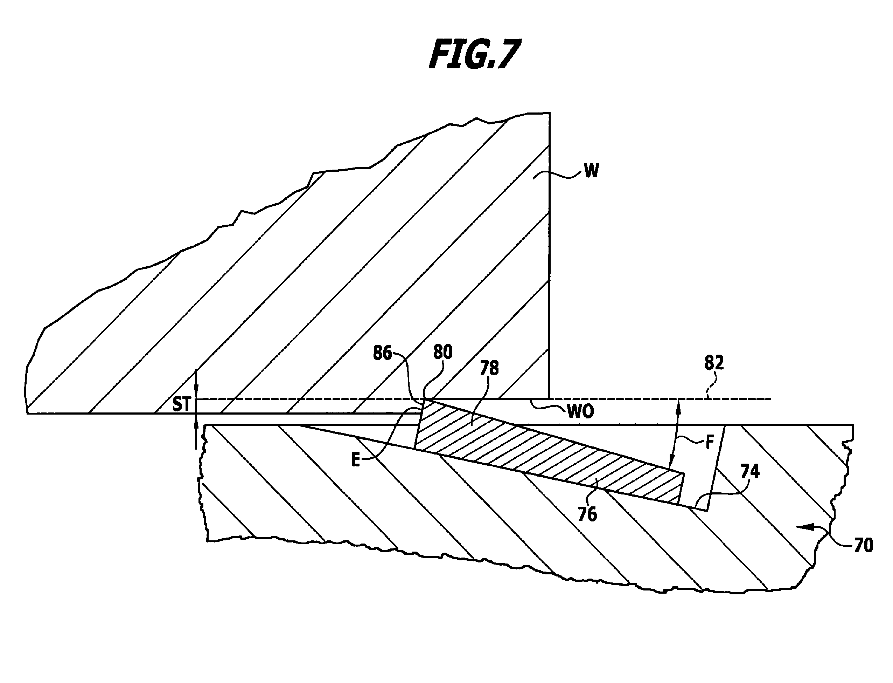

Hierbei existiert ein Freiwinkel F (Fig. 7) zwischen der Werkzeugschneide 78 und der Schneidenebene 82, der entweder durch eine zur Schneidenebene 82 geneigte Ausrichtung der Schneidplatte 76 entsteht oder in die Schneidplatte 76 eingearbeitet ist.

Die Schneidkante 80, welche in der Schneidenebene 82 liegt, verläuft dabei in einem Abstand über einer Stirnseite 84 des Werkzeuggrundkörpers, so dass die Werkzeugschneide 78 ihrerseits ebenfalls über den Werkzeuggrundkörper 70 in Richtung der Werkzeugachse 56 frei übersteht.

Die Werkzeugschneide 78 und die Schneidkante 80 weisen dabei einen Schneidenverlauf auf, welcher bezogen auf eine radiale Richtung R zur Werkzeugachse 56 gekrümmt ist, wobei der Schneidenverlauf stets eine parallel zur radialen Richtung R verlaufende Komponente aufweist.

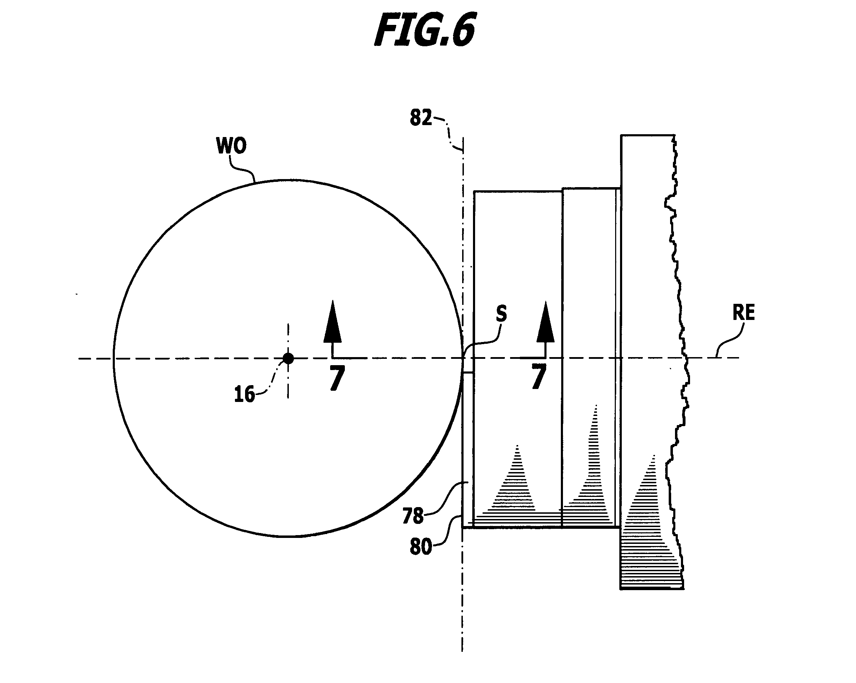

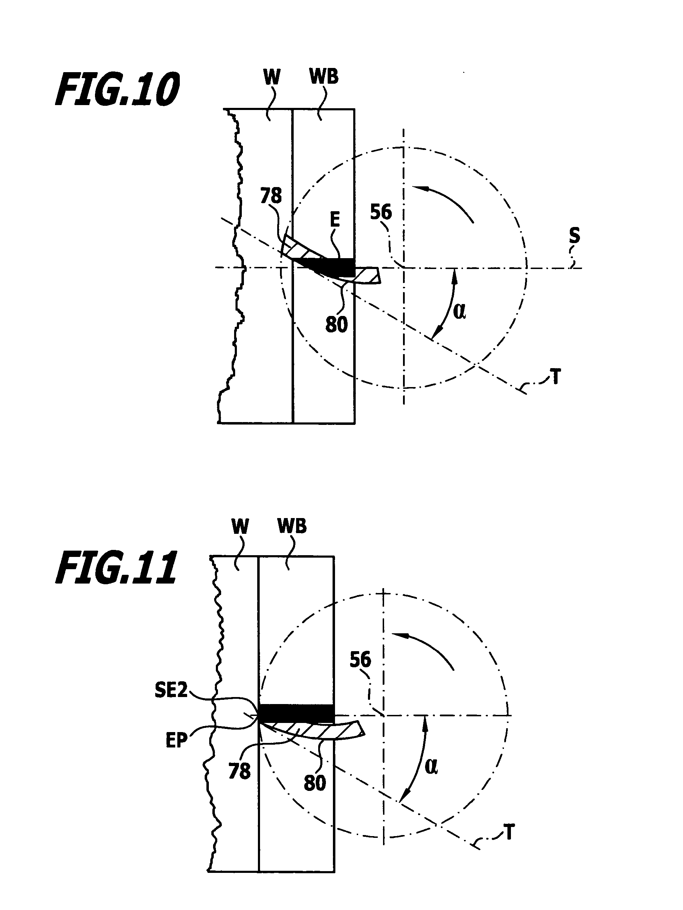

Wie in den Fig. 6 bis 11 dargestellt, besteht nun mit einer derartigen Werkzeugschneide 78 die Möglichkeit, das Werkstück W in einem Werkstückbereich WB drallfrei zu bearbeiten, das heißt in dem Werkstückbereich WB so zu bearbeiten, dass eine Werkstückoberfläche WO in diesem Werkstückbereich WB frei von gewindeähnlich verlaufenden Riefen und Graten ist.

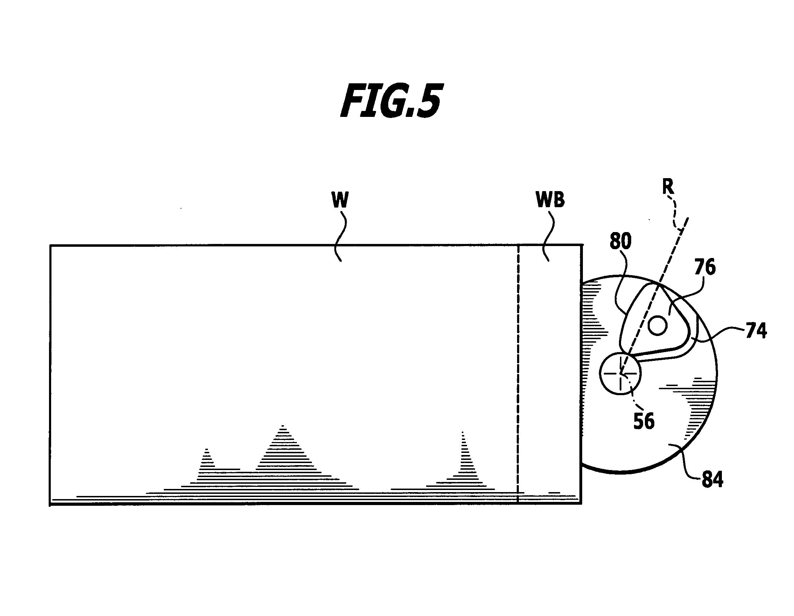

Hierzu wird, wie insbesondere in Fig. 5 und 6 ersichtlich, die Werkzeugschneide 78 mit der Schneidkante 80 so ausgerichtet, dass die Schneidenebene 82 eine Tangentialebene zu einer Schnittlinie S darstellt, welche in der herzustellenden Werkstückoberfläche WO liegt und welche außerdem in einer Radialebene zur Werkstückspindelachse 16 liegt.

Damit liegen die Werkstückspindelachse 16 und die Schnittlinie S in einer gemeinsamen Radialebene RE zur Werkstückspindelachse 16 und verlaufen somit auch in dieser Radialebene parallel oder in einem Winkel zueinander, je nach dem ob die zu erzeugende Werkstückoberfläche WO zylindrisch oder konisch zur Werkstückspindelachse 16 verläuft.

Wie in Fig. 7 vergrößert dargestellt, dringt zum Herstellen der zu bearbeitenden Werkstückoberfläche WO die Werkzeugschneide 78 mit ihrer Schneidkante 80 mit einer Spantiefe ST in das nicht bearbeitete Werkstück W ein, wobei eine spanabhebend wirksame Schneidkantenseite 86 in dem Bereich der Spantiefe ST in einem Eingriffsbereich E der Werkzeugschneide 78 spanabhebend wirkt und somit den zur Erzeugung der bearbeiteten Werkstückoberfläche WO erforderlichen Span vom Werkstück W abträgt.

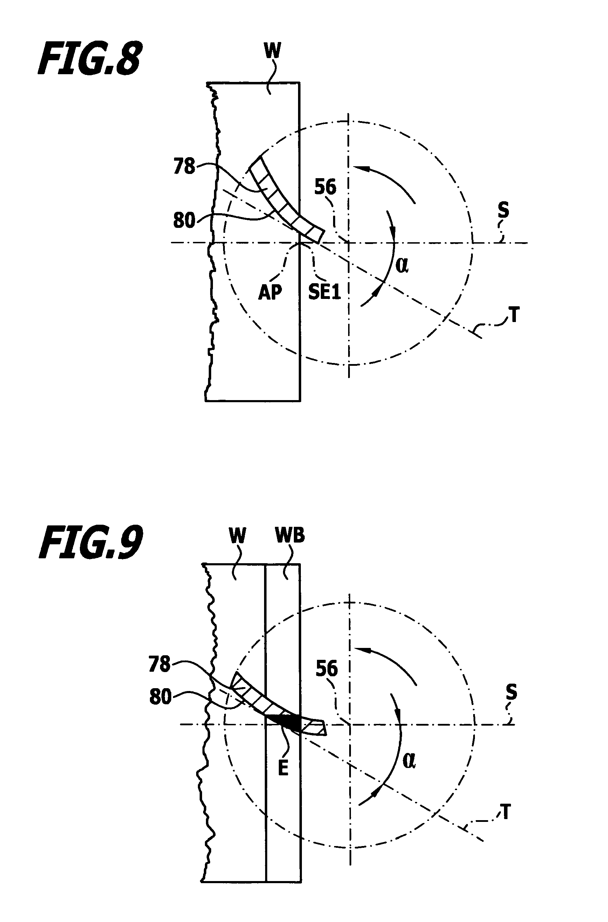

Bei dem dargestellten Ausführungsbeispiel der erfindungsgemäßen drallfreien Bearbeitung wandert nun, wie in den Fig. 8 bis 11 dargestellt, der Eingriffsbereich E der Werkzeugschneide 78 einerseits längs der Werkzeugschneide 78 und der Schneidkante 80 beispielsweise von einer radial innenliegenden Position zu einer radial außenliegenden Position, und andererseits längs der Schnittlinie S von einer Anfangsposition AP an einem Ende SE1 der Schnittlinie S bis zu einer Endposition EP am anderen Ende SE2 der Schnittlinie S, wobei jeweils die Werkzeugschneide 78 lediglich in dem Eingriffsbereich E spanabhebend wirkt.

Wie in den Fig. 8 bis 11 dargestellt, weist dabei eine von der Schneidkantenseite 86 an die Schneidkante 80 angelegte Tangente T, welche in der Schneidenebene 82 liegt, mit der ebenfalls in der Schneidenebene 82 liegenden Schnittlinie S einen spitzen Winkel (α) auf, welcher im Bereich zwischen ungefähr 20° und ungefähr 40° liegt.

Vorzugsweise liegt der Winkel (α) im Bereich zwischen 25° und 35°.

Darüber hinaus ist es für die Qualität der zu erzeugenden Werkstückoberfläche WO von Vorteil, wenn der Winkel (α) in allen Positionen des Eingriffsbereichs E längs der Schnittlinie S näherungsweise konstant ist, das heißt wenn der Winkel (α) innerhalb einer Variationsbandbreite von ungefähr 2° liegt, das heißt, dass die Differenz zwischen dem Minimalwert des Winkels (α) und dem Maximalwert des spitzen Winkels (α) bei Betrachtung aller Positionen des Eingriffsbereichs E längs der Schnittlinie S maximal 2° beträgt.

Hinsichtlich des Schneidenverlaufs sind die unterschiedlichsten Möglichkeiten denkbar.

Eine Möglichkeit einer möglichst exakten Beschreibung der Krümmung der Werkzeugschneide 78 und der Schneidkante 80 ist die, dass die Schneidkante 80 in Form einer Evolvente zu der Werkzeugachse 56 verläuft.

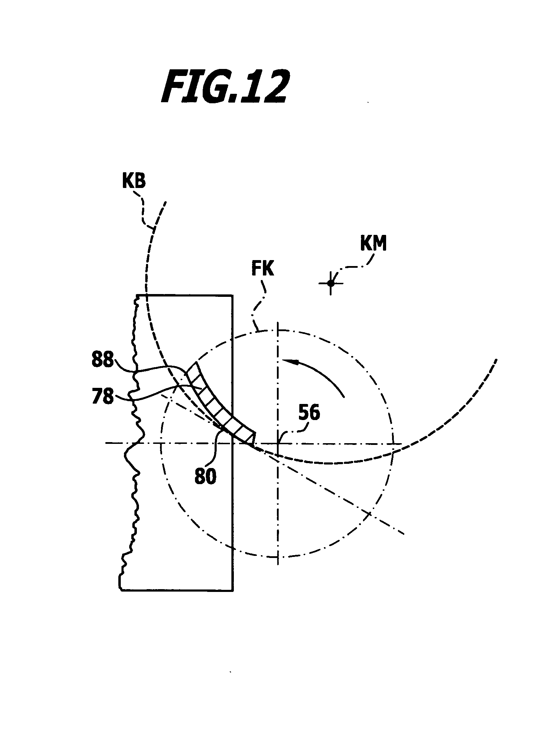

Da die Herstellung der Schneidkante 80 in Form einer Evolvente kompliziert ist, besteht auch die Möglichkeit, den Schneidenverlauf der Werkzeugschneide 78, und somit auch den Verlauf der Schneidkante 80 durch einen Kreisbogen KB anzunähern, wie in Fig. 12 dargestellt, wobei der Kreisbogen KB um einen Kreismittelpunkt KM herum verläuft, welcher in der Schneidenebene 82 jedoch außerhalb eines Flugkreises FK eines äußeren Endes 88 der Werkzeugschneide liegt.

Ferner verläuft der Kreisbogen KB so, dass er die Werkzeugachse 56 nicht schneidet, diese jedoch zwischen dem Kreisbogen KB und dem Kreismittelpunkt KM liegt, so dass ein Radius des Kreisbogens KB größer ist als ein Radius des Flugkreises FK.

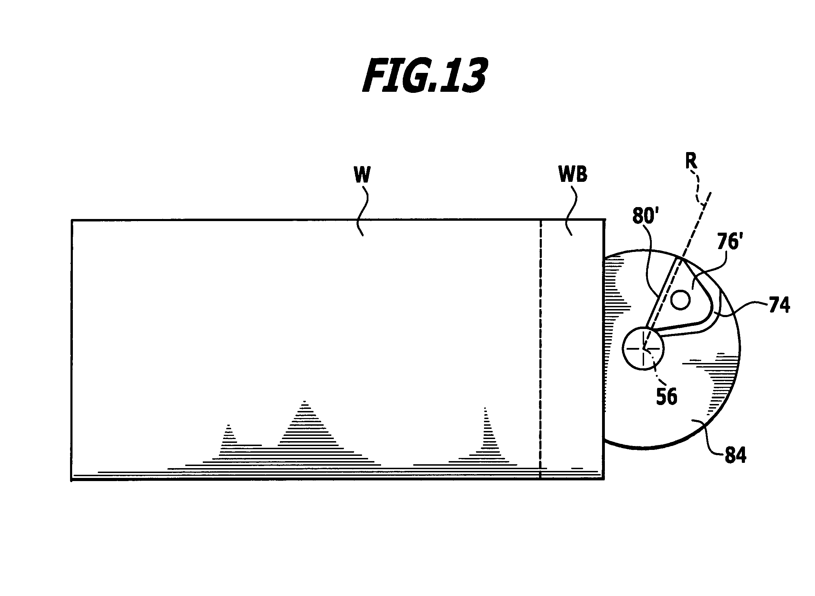

Bei einer zweiten Bearbeitungseinheit, dargestellt in Fig. 13, verläuft die Schneidkante 80' in der Schneidenebene 82 geradlinig, so dass die Schneidplatte 76' vereinfacht herstellbar ist.

Hinsichtlich der übrigen Merkmale ist die zweite Bearbeitungseinheit in gleicher Weise ausgebildet wie die erste Bearbeitungseinheit so, dass auf diese vollinhaltlich Bezug genommen werden kann.

## Patentansprüche

1. Verfahren zum Bearbeiten eines um eine Werkstückspindelachse (16) rotierend angetriebenen Werkstücks (W) mittels eines Werkzeugs (30) mit einer in einem Werkzeugträger(20) fixierbaren Werkzeugbasis (50) sowie mit einer Werkzeugschneide (78), mit welcher mindestens ein Werkstückbereich (WB) des Werkstücks (W) zur Erzeugung einer definierten Werkstückgeometrie (WO) in dem Werkstückbereich (WB) längs einer Schnittlinie (S) spanabhebend bearbeitet wird, wobei die Werkzeugschneide (78) relativ zur Werkzeugbasis (50) um eine Werkzeugachse (56) geschwenkt wird, wobei sich die Werkzeugschneide (78) auf mindestens einer Seite der Werkzeugachse (56) erstreckt, wobei die Werkzeugschneide (78) mit einer Schneidkante (80) in einer senkrecht zur Werkzeugachse (56) verlaufenden geometrischen Schneidenebene (82) liegt und wobei die Werkzeugschneide (78) sich über eine Schneidenlänge zusammenhängend erstreckt, **dadurch gekennzeichnet, dass** die Werkzeugschneide (78) einen Schneidenverlauf aufweist, der sich mit einer Komponente in radialer Richtung zur Werkzeugachse so erstreckt, dass die Schneidkante (80) mit einer dem Werkzeug (30) zugeordneten Schnittlinie in einem Schnittpunkt mit diesem einen Eingriffsbereich (E) bildet, der bei einem Verschwenken der Werkzeugschneide (78) um die Werkzeugachse (56) längs der Werkzeugschneide (78) und längs der Schnittlinie (S) wandert.

2. Verfahren nach Anspruch 1, **dadurch gekennzeichnet, dass** die Schnittlinie (S) und die Werkstückspindelachse (18) in einer gemeinsamen geometrischen Ebene (RE) liegen.

3. Verfahren nach Anspruch 1 oder 2, **dadurch gekennzeichnet, dass** die Schneidenebene (82) durch die Schnittlinie (S) hindurch und in dieser tangential zu der herzustellenden Werkstückgeometrie (WO) in dem Werkstückbereich (WB) verläuft.

4. Verfahren nach einem der Ansprüche 1 bis 3, **dadurch gekennzeichnet, dass** eine in der Schneidenebene (82) liegende Tangente (T) an eine spanabhebend wirkende Schneidkantenseite (86) der Schneidkante (80) in allen Positionen des Eingriffsbereichs (E) in einem spitzen Winkel (α) zur Schnittlinie (S) verläuft.

5. Verfahren nach einem der Ansprüche 1 bis 4, **dadurch gekennzeichnet, dass** der spitze Winkel (α) in allen Positionen des Eingriffsbereichs (F) in einem Bereich zwischen ungefähr 20° und ungefähr 40° liegt.

6. Verfahren nach Anspruch 5, **dadurch gekennzeichnet, dass** der spitze Winkel (α) in allen Positionen des Eingriffsbereichs nur innerhalb einer Variationsbandbreite von bis zu 10° variiert.

7. Verfahren nach Anspruch 6, **dadurch gekennzeichnet, dass** der spitze Winkel (α) nur innerhalb einer Variationsbandbreite von bis zu 8° variiert.

8. Verfahren nach Anspruch 6, **dadurch gekennzeichnet, dass** der spitze Winkel (α) nur innerhalb einer Variationsbandbreite von bis zu 4° variiert.

9. Verfahren nach Anspruch 6, **dadurch gekennzeichnet, dass** der spitze Winkel (α) nur innerhalb einer Variationsbandbreite von maximal 2° variiert.

10. Verfahren nach einem der Ansprüche 1 bis 9, **dadurch gekennzeichnet, dass** die Werkzeugschneide (78) einen derartigen Schneidenverlauf aufweist, dass der Eingriffsbereich (E) bei einem Schwenken der Werkzeugschneide (78) in einer Richtung von einem Ende der Schnittlinie (S) zum anderen Ende der Schnittlinie (S) wandert.

11. Verfahren nach einem der Ansprüche 1 bis 10, **dadurch gekennzeichnet, dass** die Werkzeugschneide (78) so geformt ist, dass die Schneidkante (80) in der Schneidenebene (82) geradegerichtet verläuft.

12. Verfahren nach einem der Ansprüche 1 bis 10, **dadurch gekennzeichnet, dass** die Werkzeugschneide (78) so geformt ist, dass die Schneidkante (80) in der Schneidenebene (82) gekrümmt verläuft.

13. Verfahren nach Anspruch 12, **dadurch gekennzeichnet, dass** die Schneidkante (80) in der Schneidenebene (82) sichelförmig gekrümmt verläuft.

14. Verfahren nach Anspruch 12, **dadurch gekennzeichnet, dass** die Schneidkante (80) in der Schneidenebene (82) einen an einen Kreisbogen (KB) angenäherten Verlauf aufweist.

15. Verfahren nach einem der Ansprüche 1 bis 14, **dadurch gekennzeichnet, dass** der Eingriffsbereich (E) längs der Schneidkante (80) eine Schneidenlänge durchwandert, die größer ist als eine vom Eingriffsbereich (E) durchwanderte Länge der Schnittlinie (S).

## Claims

1. Method for machining a workpiece (W) driven for rotation about a workpiece spindle axis (16) by means of a tool (30) with a tool base (50) fixable in a tool carrier (20) as well as a tool blade (78) for removing material from at least one workpiece area (WB) of the workpiece (W) for creating a defined workpiece geometry (WO) in the workpiece area (WB) along a cutting line (S), wherein the tool blade (78) is pivoted about a tool axis (56) relative to the tool base (50), wherein the tool blade (78) extends on at least one side of the tool axis (56), wherein the tool blade (78) is located with a cutting edge (80) in a geometric plane of cutting (82) extending at right angles to the tool axis (56) and wherein the tool blade (78) extends continuously over a cutting length,
**characterized in that** the tool blade (78) has a cutting course extending with one component in a radial direction relative to the tool axis such that the cutting edge (80) forms with a cutting line associated with the tool (30) at a point of intersection therewith an area of engagement (E) migrating along the tool blade (78) and along the cutting line (S) when the tool blade (78) is pivoted about the tool axis (56).

2. Method as defined in claim 1, **characterized in that** the cutting line (S) and the workpiece spindle axis (18) are located in a common geometric plane (RE).

3. Method as defined in claim 1 or 2, **characterized in that** the plane of cutting (82) extends through the cutting line (S) and in it tangentially to the workpiece geometry (WO) to be created in the workpiece area (WB).

4. Method as defined in any one of claims 1 to 3, **characterized in that** a tangent (T) to a side (86) of the cutting edge (80) acting in a material removing manner, said tangent being located in the plane of cutting (82), extends at an acute angle (α) to the cutting line (S) in all the positions of the area of engagement (E).

5. Method as defined in any one of claims 1 to 4, **characterized in that** the acute angle (α) is in a range of between approximately 20° and approximately 40° in all the positions of the area of engagement (F).

6. Method as defined in claim 5, **characterized in that** the acute angle (α) varies only within a range of variation of up to 10° in all the positions of the area of engagement.

7. Method as defined in claim 6, **characterized in that** the acute angle (α) varies only within a range of variation of up to 8°.

8. Method as defined in claim 6, **characterized in that** the acute angle (α) varies only within a range of variation of up to 4°.

9. Method as defined in claim 6, **characterized in that** the acute angle (α) varies only within a range of variation of at the most 2°.

10. Method as defined in any one of claims 1 to 9, **characterized in that** the tool blade (78) has such a cutting course that the area of engagement (E) migrates in a direction from one end of the cutting line (S) to the other end of the cutting line (S) when the tool blade (78) is pivoted.

11. Method as defined in any one of claims 1 to 10, **characterized in that** the tool blade (78) is shaped such that the cutting edge (80) extends in the plane of cutting (82) with a straight alignment.

12. Method as defined in any one of claims 1 to 10, **characterized in that** the tool blade (78) is shaped such that the cutting edge (80) extends in the plane of cutting (82) in a curved manner.

13. Method as defined in claim 12, **characterized in that** the cutting edge (80) extends in the plane of cutting (82) curved in a sickle shape.

14. Method as defined in claim 12, **characterized in that** the cutting edge (80) has a course approximated to a circular arc (KB) in the plane of cutting (82).

15. Method as defined in any one of claims 1 to 14, **characterized in that** the area of engagement (E) migrates along the cutting edge (80) through a cutting length greater than a length of the cutting line (S) transmigrated by the area of engagement (E).

## Revendications

1. Procédé d'usinage d'une pièce (W) entraînée en rotation autour d'un axe de broche de pièce (16) par un outil (30) avec une base d'outil (50) pouvant être fixée dans un porte-outil (20) ainsi qu'avec un tranchant d'outil (78), au moyen duquel au moins une zone (WB) de la pièce (W) est usinée avec enlèvement de matière pour générer une géométrie de pièce (WO) définie dans la zone de pièce (WB) le long d'une ligne de coupe (S), le tranchant d'outil (78) étant pivoté autour d'un axe d'outil (56) par rapport à la base d'outil (50), le tranchant d'outil (78) s'étendant sur au moins un côté de l'axe d'outil (56), le tranchant d'outil (78) s'étendant par une arête de coupe (80) sur un plan de coupe (82) géométrique perpendiculaire à l'axe d'outil (56), et le tranchant d'outil (78) s'étendant de manière continue sur une longueur de coupe, **caractérisé en ce que** le tranchant d'outil (78) présente un tracé de tranchant qui s'étend par un composant en direction radiale par rapport à l'axe d'outil, de telle manière que l'arête de coupe (80) forme avec une ligne de coupe associée à l'outil (30) une zone de contact (E) à un point d'intersection avec celui-ci, laquelle se déplace le long du tranchant d'outil (78) et le long de la ligne de coupe (S) lors d'un pivotement du tranchant d'outil (78) autour de l'axe d'outil (56).

2. Procédé selon la revendication 1, **caractérisé en ce que** la ligne de coupe (S) et l'axe de broche de pièce (18) s'étendent sur un plan géométrique (RE) commun.

3. Procédé selon la revendication 1 ou 2, **caractérisé en ce que** le plan de coupe (82) traverse la ligne de coupe (S) et s'étend sur celle-ci tangentiellement à la géométrie de pièce (WO) à générer dans la zone de pièce (WB).

4. Procédé selon l'une des revendications 1 à 3, **caractérisé en ce qu'**une tangente (T) comprise dans le plan de coupe (82) s'étend suivant un angle aigu (a) par rapport à la ligne de coupe (S) sur un côté (86) de l'arête de coupe (80) ayant une action d'enlèvement de matière dans toutes les positions de la zone de contact (E).

5. Procédé selon l'une des revendications 1 à 4, **caractérisé en ce que** l'angle aigu (α) est compris entre 20° environ et 40° environ dans toutes les positions de la zone de contact (F).

6. Procédé selon la revendication 5, **caractérisé en ce que** l'angle aigu (α) ne varie qu'à l'intérieur d'une plage de variation jusqu'à 10° dans toutes les positions de la zone de contact.

7. Procédé selon la revendication 6, **caractérisé en ce que** l'angle aigu (α) ne varie qu'à l'intérieur d'une plage de variation jusqu'à 8°.

8. Procédé selon la revendication 6, **caractérisé en ce que** l'angle aigu (α) ne varie qu'à l'intérieur d'une plage de variation jusqu'à 4°.

9. Procédé selon la revendication 6, **caractérisé en ce que** l'angle aigu (α) ne varie qu'à l'intérieur d'une plage de variation de 2° au maximum.

10. Procédé selon l'une des revendications 1 à 9, **caractérisé en ce que** le tranchant d'outil (78) présente un tracé de tranchant tel que la zone de contact (E) se déplace d'une extrémité de la ligne de coupe (S) vers l'autre extrémité de la ligne de coupe (S) lors d'un pivotement du tranchant d'outil (78) dans une direction.

11. Procédé selon l'une des revendications 1 à 10, **caractérisé en ce que** le tranchant d'outil (78) est formé de telle manière que l'arête de coupe (80) s'étend en ligne droite sur le plan de coupe (82).

12. Procédé selon l'une des revendications 1 à 10, **caractérisé en ce que** le tranchant d'outil (78) est formé de telle manière que l'arête de coupe (80) s'étend en ligne courbe sur le plan de coupe (82).

13. Procédé selon la revendication 12, **caractérisé en ce que** l'arête de coupe (80) s'étend avec une courbure en faucille sur le plan de coupe (82).

14. Procédé selon la revendication 12, **caractérisé en ce que** l'arête de coupe (80) présente un tracé sensiblement en arc de cercle (KB) sur le plan de coupe (82).

15. Procédé selon l'une des revendications 1 à 14, **caractérisé en ce que** la zone de contact (E) se déplace le long de l'arête de coupe (80) sur une longueur de coupe supérieure à une longueur de la ligne de coupe (S) parcourue par la zone de contact (E).
